# EUROPEAN PATENT SPECIFICATION

(11) **EP 4 660 227 B1**
(45) Date of publication and mention of the grant of the patent: **21.10.2026**
(21) Application number: 25209053.5
(22) Date of filing: 19.11.2024
(51) Int. Cl.: C08J 9/32

(54) **METHOD FOR PRE-EXPANDING THERMALLY EXPANDABLE MICROSPHERES**
VERFAHREN ZUR VOREXPANSION THERMISCH EXPANDIERBARER MIKROKUGELN
PROCÉDÉ DE PRÉ-EXPANSION DE MICROSPHÈRES THERMIQUEMENT EXPANSIBLES

(30) Priority: 27.11.2023 EP 23212332
(43) Date of publication of application: 10.12.2025
(62) Document number(s) of the earlier application(s) in accordance with Art. 76 EPC: 24808951.8 / 4 584 014
(73) Proprietor: Nouryon Chemicals International B.V., 1101 BZ Amsterdam (NL)
(72) Inventor: AJDÉN, Per, 1101 BZ Amsterdam (NL); HOLMLUND, Thomas, 1101 BZ Amsterdam (NL); SVENSSON, Fredrik, 1101 BZ Amsterdam (NL)
(74) Representative: Ingrassia, Fisher & Lorenz UK Ltd.

(56) References cited:
- US-A1- 2007 043 130
- US-A1- 2022 081 528
- NOURYON: "Product Specification Expancel Microspheres", 31 January 2019 (2019-01-31), boud.com, pages 1 - 2, XP093401144, Retrieved from the Internet <URL:https://www.boud.com/wp-content/uploads/2019/03/Expancel-DU-Specification-JAN2019_1.pdf> [retrieved on 20260526]

## Description

### Technical Field

The present disclosure relates to a device and methods for expanding thermally expandable microspheres.

### Background

Thermally expandable microspheres are known in the art and described in detail in, for example, US 3615972, EP 486080, EP 566367 and EP 1 067 151, which documents are hereby incorporated by reference. In such microspheres, a propellant is encapsulated within a thermoplastic shell. Upon heating, the propellant evaporates to increase the internal pressure, at the same time as the shell softens, resulting in significant expansion of the microspheres, normally from about 2 to about 5 times their diameter.

Thermoplastic microspheres can be used in various applications in unexpanded or pre-expanded form. Examples of applications for expanded microspheres are solvent based resins, like polyester, for dry spheres, and water-based application systems, like paint, for wet spheres. Numerous end-use applications require the expanded microspheres to be substantially white in colour, such as in artificial ("synthetic") marble, paints and coatings with a light colour (e.g., white paint), and polyurethane blocks for model making.

Full expansion of thermoplastic microspheres may lead to problems with agglomeration due to the higher temperature needed for full expansion, in combination with the thin thermoplastic shell which results from the expansion.

EP 0 348 372 discloses a process for preparation of expanded thermoplastic microspheres where the expansion takes place on a conveyor belt. The process works well but takes up considerable space and is comparatively expensive.

US Patent No. 4,722,943 and US Patent No. 5,342,689 describe methods for expanding microspheres where microspheres are mixed with a surface barrier coating to prevent agglomeration during a drying step. However, the amount of processing aid, such as talc, is very high which affects the possibilities of fast cooling. This causes difficulties in controlling the degree of expansion of the microspheres. US2007043130A1 discloses a method and an expansion device for preparing expanded thermoplastic microspheres. US2022081528A1 relates to foam thermoplastic vulcanizate pellet compositions, methods, and articles related thereto.

WO-A-9220465 describes a method of making microspheres substantially free of water comprising combining expandable thermoplastic microspheres and a surface barrier liquid and subjecting the resulting mixture to high shear mixing sufficient to disrupt or prevent the formation of agglomerates and concurrently heating the admixture for a time and temperature sufficient to remove substantially all water from the microspheres. Optionally the mixture may be heated to a temperature sufficient to expand the microspheres. The process may be conducted in a plow mixer.

EP1572432 provides a method of preparing expanded thermoplastic microspheres, which can be made in small equipment, which gives minimum of dust problems, which gives minimum of agglomeration, where the degree of expansion of the microspheres can be more easily controlled than before, and which also gives a possibility to continuously producing a product of expanded microspheres having a narrow density distribution. EP1572432 also provides an apparatus for performing said method, which said apparatus comprises an expansion device comprising rotatable feeding means enveloped by a hollow body.

The apparatus disclosed in EP1572432 has proven to be highly successful in the technical field of expandable thermoplastic microspheres and continues to be a very popular device for this technical application (i.e., preparing expanded thermoplastic microspheres).

That said, over the many years of service in the field, several upgrades have been made to the apparatus of EP1572432. Whilst most of those upgrades were routine modifications of the device (e.g., upgrading filters, gearbox, coupling mechanisms, etc. to newer and/or more advanced models), two technical issues have been identified that have proven to be not-so-straightforward to fix: "black spot" formation in the product, and clogging in the rotatable feeding means at higher feed rates (i.e., higher product throughput).

"Black-spot formation" as used herein is a general term referring to a discoloration (generally yellowing) of the product and/or the formation of visually observable black/brown particulates (spots) in the expanded product. These are generally undesirable traits, as the expanded product that is subsequently used in many downstream applications ideally should be a white, fluffy material (numerous end-use applications require a substantially white product). Accordingly, a first objective of the present disclosure was to address the issue of "black spot" formation.

A second objective of the present disclosure was to provide a way to overcome the clogging issue at higher product throughput.

### Summary

A surprising finding was that "black spot" formation in the device disclosed in EP1572432 could be substantially reduced by polishing (i.e., reducing the average microroughness of) the majority, preferably all, of the surface of the rotatable feeding means that comes into contact with the thermally expandable microspheres during operation of the device.

Accordingly, in a first aspect, the present disclosure relates to an expansion device for preparing expanded microspheres, the expansion device comprising rotatable feeding means disposed within a housing (e.g., a hollow body) having a first end and a second end longitudinally opposite the first end, wherein the rotatable feeding means comprises a microsphere contact surface and is configured to convey microspheres from the first end of the housing to the second end of the housing, and wherein at least 80% of the microsphere contact surface has been polished (i.e., at least 80% of the total surface area of the microsphere contact surface has been polished). Preferably, at least 90%, more preferably at least 95%, more preferably at least 99%, and most preferably the entire microsphere contact surface has been polished.

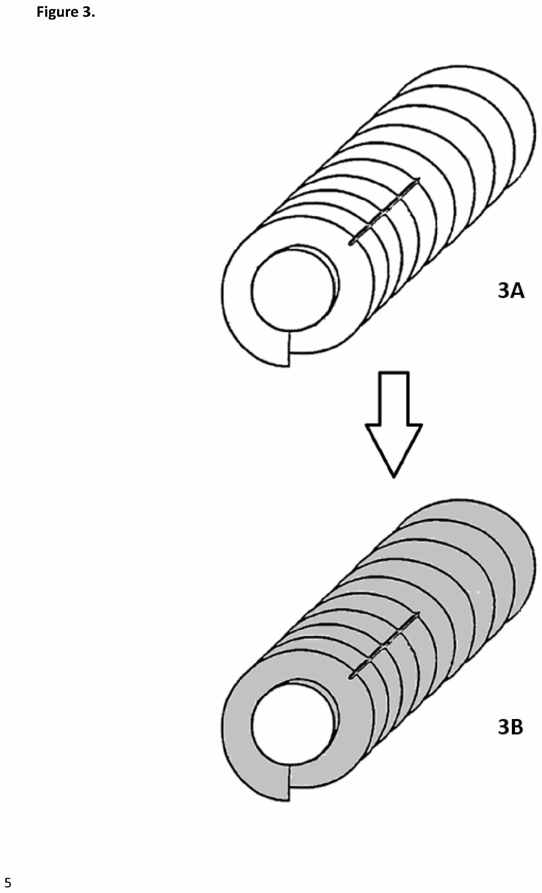

For the avoidance of doubt, the "microsphere contact surface" of the rotatable feeding means is to be understood as the entire external surface of the rotatable feeding means that can come into contact with microspheres during operation of the device. For example, the preferred feeding means of the present disclosure is a screw conveyor, so the "microsphere contact surface" is the threaded portion of the screw (including the exposed axle surface) that contacts the microspheres when the device is in operation (see Figure 3B, which illustrates a screw conveyor wherein the entire microsphere contact surface has been polished (the polished microsphere contact surface - and thus the "microsphere contact surface" - is illustrated by the greyed-out surfaces)). This term does not mean only a sub-part of the surface of the rotatable feeding means that contacts microspheres during operation, nor does it relate to surfaces of the rotatable feeding means that are not exposed to microspheres during operation (e.g., the term would not extend to an end surface of an axle of the rotatable feeding means that is disposed within a gearbox proximal to the housing, e.g., the non-greyed-out area in Figure 3B).

Similarly, for the avoidance of doubt, a surface that has been "polished" is a surface that has been subjected to a process that reduces the microroughness of the surface (i.e., reduces the roughness of the surface at the micron scale). This is the ordinary and well-understood meaning of this term within this technical context.

There are many well-known processes for polishing a surface (i.e., reducing the microroughness of the surface), such as, but not necessarily limited to, mechanical polishing, chemical polishing, electrochemical polishing, or combinations thereof. Additionally, a surface may be polished in a single polishing step, or it may be polished by multiple polishing steps in sequence, e.g., a mechanical polishing step followed by an electrochemical polishing step. For the purposes of the present disclosure, the number, type, and/or combination of polishing steps for polishing the surface of the rotating means is not particularly limited. The only requirement in that respect is that the average microroughness of the surface is reduced as a result of the polishing process. That said, electrochemical polishing (also known as "electropolishing") is the preferred process for polishing the surface of the rotatable feeding means. For the avoidance of doubt, electropolishing, also known as electrochemical polishing, anodic polishing, or electrolytic polishing, is an electrochemical process that removes material from a metallic workpiece, thereby reducing the surface roughness by levelling micro-peaks and valleys.

Accordingly, in a preferred embodiment, at least 80% of the microsphere contact surface has been electropolished (preferably electropolished in accordance with European standard EN ISO 15730:2016 or US standard ASTM B912), preferably at least 90% of the microsphere contact surface has been electropolished, more preferably at least 95% of the microsphere contact surface has been electropolished, and most preferably the entire microsphere contact surface has been electropolished.

As noted above, the only technical requirement of the polishing step is that the average microroughness of the surface is reduced as a result of the polishing process. A standard metric for measuring the average microroughness of a surface is "Roughness average", or simply "Ra", which is described in ASME B46.1 as the arithmetic average of the absolute values of the profile height deviations from the mean line, recorded within the evaluation length. For the present disclosure, Ra is determined using a Mahr Perthometer M2 (Mahr GmbH Göttingen, Germany; the user manual for the Mahr Perthometer M2 indicates that Ra is determined in accordance with DIN EN ISO 4287, and the Ra value as determined by the device is reported by the device in microns [µm]). In a preferred embodiment, the polished microsphere contact surface has an average Ra value of less than 0.6 µm, preferably less than 0.5 µm (as determined using the Mahr Perthometer M2). "Average Ra value" is determined as the average of three Ra values measured at three separate locations along the length of the microsphere contact surface.

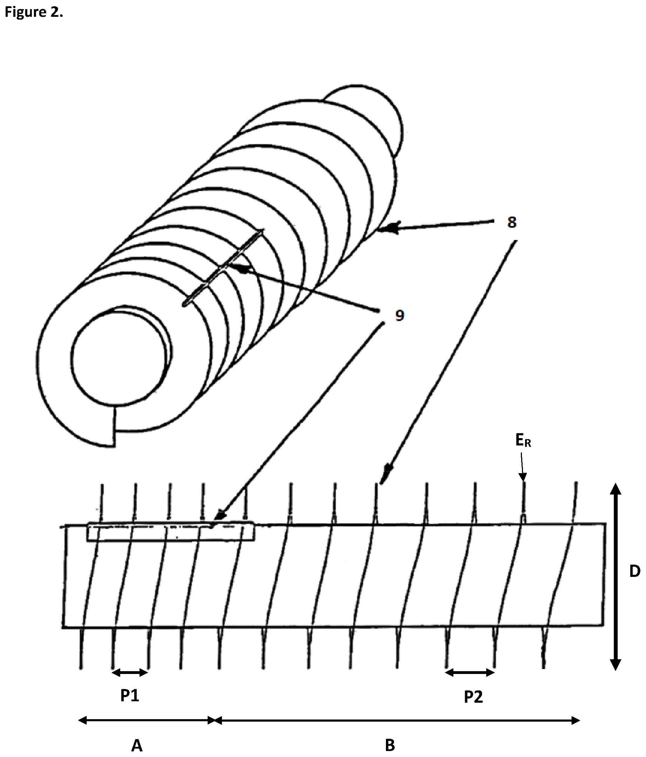

In a preferred embodiment of the present disclosure, the rotatable feeding means is in the form of a screw or is in the form of one or more paddles protruding from a central core. Most preferably, the rotatable feeding means is in the form of a screw (i.e., a screw conveyor), e.g., Figures 2 and 3.

Thus, in a preferred embodiment, the present disclosure relates to an expansion device for preparing expanded microspheres, the expansion device comprising a rotatable screw disposed within a housing (e.g., a hollow body) having a first end and a second end longitudinally opposite the first end, wherein the rotatable screw comprises a microsphere contact surface and is configured to convey microspheres from the first end of the housing to the second end of the housing, and wherein at least 80% of the microsphere contact surface has been polished (i.e., at least 80% of the total surface area of the microsphere contact surface has been polished). Preferably, at least 90%, more preferably at least 95%, more preferably at least 99%, and most preferably the entire microsphere contact surface has been polished. More preferably, the polished surface has an average Ra value of less than 0.6 µm, preferably less than 0.5 µm (Ra determined using the Mahr Perthometer M2).

The expansion device may further comprise one or more scrapers positioned between the outer radius of the feeding means and the inner surface of the housing. The scrapers prevent layers of microspheres being built-up in the expansion device. Preferably, the one or more scrapers are at least partly in contact with the inner surface of the housing. The one or more scrapers suitably have certain flexibility so that the one or more scrapers, when pressed against the inner surface of the housing, will provide a tight contact between the one or more scrapers and the inner surface of the housing. Preferably, the one or more scrapers, or a surface layer of the one or more scrapers, are/is suitably made of a polymeric material, preferably a heat-resistant polymeric material. The polymeric material is preferably a fluoroplastic material, such as PTFE, PVDF, PFA or FEP. If the polymeric material is a thermoplastic, the melting point of the polymeric material is suitably above about 200 °C, preferably above 250 °C. Suitable scrapers and configurations thereof are disclosed in detail in EP1572432, the content of which is hereby incorporated by reference.

In a second aspect, the present disclosure relates to a method of preparing expanded thermoplastic microspheres with reduced black-spot formation, the method comprising charging thermally expandable microspheres into an expansion device as described above, transporting the microspheres from the first end of the housing to the second end of the housing while increasing the temperature of the microspheres to achieve expansion thereof, and discharging the microspheres from the expansion device.

In a preferred embodiment, the thermally expandable microspheres are pre-mixed with a filler before the thermally expandable microspheres are charged to the expansion device. The filler is added to prevent agglomeration of the microspheres. In a preferred embodiment, the filler is a silica (i.e., silicon dioxide). The weight ratio of filler to microspheres is preferably from about 1:100 to about 1:3.

In a preferred embodiment, the thermally expandable microspheres that are charged to the expansion device have a dry solids content of more than about 97 weight %.

As noted above, clogging in the rotatable feeding means was observed at higher throughput. In EP1572432, the exemplified device provided a throughput of 14 kg/h of expanded microspheres of even density. It has been found, however, that attempting to increase that product throughput in that device to closer to 30 kg/h (by increasing the microsphere feed rate to the device) resulted in "clogging" of the feeding means (i.e., at that increased feed rate the feeding means in the expansion device became blocked, forcing shutdown of the device for safety reasons). A surprising finding was that this issue could be resolved by increasing the tip speed (i.e., the linear velocity at the outermost radial edge) of the feeding means to at least 0.8 ms⁻¹, such as from 0.8 to 0.99 ms⁻¹, preferably to at least 0.9 ms⁻¹, such as from 0.9 to 0.99 ms⁻¹, and also setting the temperature in the expansion device to at least 40 °C above Tₛₜₐᵣₜ, more preferably at least 50 °C above Tₛₜₐᵣₜ, and most preferably from 50 °C to 150°C above Tₛₜₐᵣₜ. For the apparatus exemplified below (screw conveyor with a blade diameter **D** (Fig. 2) of 205 mm and an outermost radial edge of the blade **E_{R}** (Fig. 2)), a tip speed (i.e., linear velocity at the outermost radial edge of the blade) of at least 0.8 ms⁻¹ corresponds to a rate of rotation of the feeding means of about 75 rotations per minute (rpm), much like a tip speed of at least 0.9 ms⁻¹ corresponds to a rate of rotation of that feeding means of about 84 rotations per minute (rpm). "Tₛₜₐᵣₜ" is the temperature at which the expansion of the microspheres starts, while the temperature at which maximum expansion is reached is called Tₘₐₓ, both determined at a temperature increase rate of 20°C per minute (thermomechanical analysis). The thermally expandable microspheres used in the present disclosure typically have a Tₛₜₐᵣₜ of from about 20 to about 200 °C, preferably from about 40 to about 180 °C, most preferably from about 60 to about 150 °C. The thermally expandable microspheres used in the present disclosure typically have a Tₘₐₓ of from about 50 to about 300 °C, preferably from about 100 to about 250 °C, most preferably from about 140 to about 200 °C.

Accordingly, in a third aspect, the present disclosure relates to a method of preparing expanded thermoplastic microspheres at a throughput rate of at least 25 kg/h, the method comprising charging thermally expandable microspheres into an expansion device comprising rotating feeding means disposed within a housing having a first end and a second end longitudinally opposite the first end, transporting the microspheres from the first end of the housing to the second end of the housing while increasing the temperature of the microspheres to achieve expansion thereof, and discharging the microspheres from the expansion device, wherein the tip speed (i.e., linear velocity at the outermost radial edge) of the feeding means is set to at least 0.8 ms⁻¹, and wherein the temperature in the expansion device is set to at least 40 °C above Tₛₜₐᵣₜ.

Both the "black-spot formation" and clogging issues mentioned above can be addressed simultaneously by combining the above aspects. Accordingly, in a preferred embodiment, the present disclosure relates to a method of preparing expanded thermoplastic microspheres at a throughput rate of at least 25 kg/h and with reduced black-spot formation, the method comprising charging thermally expandable microspheres into an expansion device comprising rotating feeding means disposed within a housing having a first end and a second end longitudinally opposite the first end, transporting the microspheres from the first end of the housing to the second end of the housing while increasing the temperature of the microspheres to achieve expansion thereof, and discharging the microspheres from the expansion device, wherein the rotating feeding means comprises a microsphere contact surface that conveys the microspheres from the first end of the housing to the second end of the housing, wherein at least 80% of said microsphere contact surface has been polished, wherein the tip speed (i.e., linear velocity at the outermost radial edge) of the feeding means is set to at least 0.8 ms⁻¹, and wherein the temperature in the expansion device is set to at least 40 °C above Tₛₜₐᵣₜ.

### Figures

Figure 1 illustrates a typical setup of an apparatus comprising the expansion device disclosed herein.
Figure 2 provides a schematic of a preferred feeding means in the form of a screw conveyor with scrapers attached and a variable pitch.
Figure 3 provides a schematic of an unpolished microsphere contact surface (3A) and a screw conveyor with a polished microsphere contact surface (3B).

### Detailed Description

The following Detailed Description is merely exemplary in nature and is not intended to limit the various embodiments or the application and uses thereof. Furthermore, there is no intention to be bound by any theory presented in the preceding background or the following detailed description.

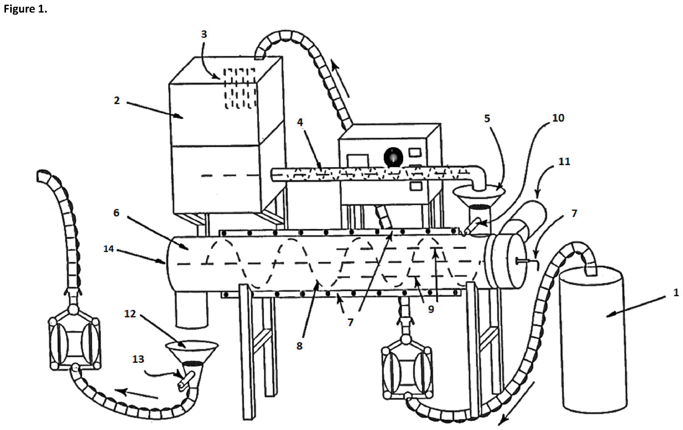

A typical setup of an apparatus comprising the expansion device disclosed herein is illustrated in Figure 1. In operation, the unexpanded thermoplastic microspheres are pumped from a storage tank 1 into a silo 2 and filtered through a filter 3. Thereafter, the microspheres are fed into a first screw feeder 4 and transported to an inlet 5 at a first end of a cylindrical housing 14 of an expansion device 6 comprising heating means 7, the cylindrical housing 14 enveloping a screw 8 with mounted scrapers 9. The inlet 5 is provided with a vibrator 10 and the screw is suitably connected to a motor 11. Expanded microspheres are suitably discharged through an outlet 12 at a second end of the cylindrical housing, provided with a vibrator 13, and suitably pumped away.

Figure 2 illustrates a preferred embodiment of the rotatable feeding means in the form of a conveyor screw. The conveyor screw 8 has a mounted scraper 9 and a diameter **D.** One portion **A** of the screw has a pitch **P₁** and another portion **B** of the screw has a different pitch **P₂.** The screw preferably has a pitch to diameter ratio of from about 0.05 to about 1.5, more preferably from about 0.15 to about 0.5. The pitch of the screw is preferably lower at the beginning of the screw (i.e. at the first end of the housing) than at the end of the screw (i.e., at the second end of the housing). The pitch of the screw can be gradually increasing along the length of the screw. Alternatively, the pitch can be increasing in discrete steps, so that one portion of the screw has a different pitch than another portion of the screw.

Figure 3 provides a schematic explanation of a polished microsphere contact surface as required by the present disclosure. Figure 3A represents an unpolished screw conveyor, whereas Figure 3B represents a screw conveyor wherein the entire microsphere contact surface has been polished (the polished microsphere contact surface is illustrated by the greyed-out surfaces). Figure 3B represents a most preferred embodiment of the rotatable feeding means of the present disclosure, namely a screw conveyor wherein the entire microsphere contact surface of the screw conveyor has been electropolished in accordance with EN ISO 15730:2016 or ASTM B912.

The one or more scrapers 9, or a surface layer of the one or more scrapers 9, is/are suitably made of a polymeric material, preferably a heat-resistant polymeric material. The polymeric material is preferably a fluoroplastic material, such as PTFE, PVDF, PFA or FEP. If the polymeric material is a thermoplastic, the melting point of the polymeric material is suitably above about 200 °C, preferably above 250 °C.

Preferably, the one or more scrapers 9 are at least partly in contact with the inner surface of the housing 14. The one or more scrapers suitably have certain flexibility so that the one or more scrapers, when pressed against the inner surface of the housing, will provide a tight contact between the one or more scrapers and the inner surface of the housing.

The housing is preferably a hollow body. The housing preferably envelops the rotatable feeding means; in the exemplified embodiment of Figure 1 the housing 14 is a hollow cylindrical body enveloping the screw conveyor 8. Thus, in a preferred embodiment, the expansion device comprises rotatable feeding means enveloped by a housing (preferably a substantially cylindrical hollow body) having a first end and a second end longitudinally opposite the first end. The housing is suitably provided with one or more heaters 7. The heaters are suitably jacket heaters. The feeding means itself may also suitably provided with one or more heaters 7.

The thermally expandable microspheres are suitably transported to the inlet 5 of the expansion device 6 by using a screw feeder 4, which can be provided with heaters.

The thermally expandable microspheres are suitably pre-mixed, before entering the expansion device, with a filler preventing agglomeration of the microspheres. The filler is suitably in the form of fine particles having a particle diameter range from about 1·10⁹ to about 1·10⁻³ m, preferably from about 1·10⁻⁸ to about 3·10⁻⁵ m. Examples of fillers are inorganic compounds such as: aluminium powder, magnesium carbonate, magnesium phosphates, magnesium hydroxide, dolomite, calcium carbonate, calcium phosphates, calcium sulphate, talc, kaolin, silicon oxides, iron oxides, titanium oxide, aluminium oxides and hydroxides, zinc oxide, hydrotalcite, mica, barytes, glass spheres, fly ash, fine sand, mineral fibres and generally reinforcing fibres, wollastonite, feldspars, diatomaceous earth, pearlites, vermicullites, hollow quartz and ceramic spheres. Also organic compounds may be used, especially polymers with a sufficient high softening temperature, and cellulose, wood flour, carbon black, carbon fibres and graphite fibres. Preferably, the filler is a silicon oxide such as silicon dioxide. The filler may be used in its pure form or it may be surface treated in different ways in order to increase the agglomerate preventing effect. One way of surface treating the filler is to make it hydrophobic (e.g., a hydrophobic silica). The weight ratio added filler to microspheres is depending on which filler is used, but is suitably from about 1:1000 to about 5:1, preferably from about 1:500 to about 1:1, even more preferably from about 1:100 to about 1:3, and most preferably from about 1:25 to about 1:5.

The method and the expansion device according to the disclosure can be used for all known kinds of expandable thermoplastic microspheres, such as those marketed under the trademark Expancel^{®}. Suitable microspheres may have a thermoplastic shell made from polymers or co-polymers obtainable by polymerizing various ethylenically unsaturated monomers which can be nitrile containing monomers such as acrylonitrile, methacrylonitrile, α-chloroacrylonitrile, α-ethoxyacrylonitrile, fumaronitrile, crotononitrile, acrylic esters such as methylacrylate or ethyl acrylate, methacrylic esters such as methyl methacrylate, isobornyl methacrylate or ethyl methacrylate, itaconates such as dimethyl itaconate, furfuryls such as tetrahydrofurfuryl methacrylate, vinyl halides such as vinyl chloride, vinylidene halides such as vinylidene chloride, vinyl pyridine, vinyl esters such as vinyl acetate, styrenes such as styrene or α-methyl styrene, vinyl ethers such as methyl vinyl ether, ethyl vinyl ether, N-substituted maleimides, or dienes such as butadiene, isoprene and others. Any mixtures of the above mentioned monomers may also be used. It may sometimes be desirable that the monomers for the polymer shell also comprise crosslinking multifunctional monomers, such as one or more of divinyl benzene, ethylene glycol di(meth)acrylate, diethylene glycol di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, pentaerythritol hexa(meth)acrylate, dimethylol tricyclodecane di(meth)acrylate, triallylformal tri(meth)acrylate, allyl methacrylate, trimethylol propane tri(meth)acrylate, trimethylol propane triacrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal or triallyl isocyanate, triallyl isocyanurate etc. If present, such crosslinking monomers preferably constitute from about 0.1 to about 1 wt%, most preferably from about 0.2 to about 0.5 wt% of the total amounts of monomers for the polymer shell. Preferably the polymer shell constitutes from about 60 to about 95 wt%, most preferably from about 75 to about 85 wt% of the total microsphere.

The propellant in a microsphere is normally a liquid having a boiling temperature not higher than the softening temperature of the thermoplastic polymer shell. The propellant, also called the blowing agent or foaming agent, can be hydrocarbons such as n-pentane, isopentane, neopentane, butane, isobutane, hexane, isohexane, neohexane, heptane, isoheptane, octane and isooctane, or mixtures thereof. Also, other hydrocarbon types can also be used, such as petroleum ether, and chlorinated or fluorinated hydrocarbons, such as methyl chloride, methylene chloride, dichloro ethane, dichloro ethylene, trichloro ethane, trichloro ethylene, trichlorofluoro methane etc. The propellant suitably makes up from about 5 to about 40 weight % of the microsphere.

As mentioned above, the temperature at which the expansion of the microspheres starts is called Tₛₜₐᵣₜ, while the temperature at which maximum expansion is reached is called Tₘₐₓ, both determined at a temperature increase rate of 20 °C per minute. The thermally expandable microspheres used in the present disclosure suitably have a Tₛₜₐᵣₜ of from about 20 to about 200 °C, preferably from about 40 to about 180 °C, most preferably from about 60 to about 150 °C. The thermally expandable microspheres used in the present disclosure suitably have a Tₘₐₓ of from about 50 to about 300 °C, preferably from about 100 to about 250 °C, most preferably from about 140 to about 200 °C.

The volume weighted average particle size of the thermally expandable microspheres, according to the present disclosure, is suitably from about 1 to about 500 µm, preferably from about 3 to about 100 µm, most preferably from about 5 to about 50 µm. By heating to a temperature above Tₛₜₐᵣₜ, it is normally possible to expand the microspheres from about 2 to about 7 times, preferably from about 4 to about 7 times, their diameter.

The density of the microspheres discharged is controlled by choosing a suitable heating temperature and/or length of time during which the microspheres are present in the expansion device. The temperature in the expansion device is suitably above Tₛₜₐᵣₜ, preferably 5 to 150 °C above Tₛₜₐᵣₜ. For higher product throughput, the temperature in the expansion device is at least 40°C above Tₛₜₐᵣₜ, preferably at least 50 °C above Tₛₜₐᵣₜ, most preferably 50 to 150 °C above Tₛₜₐᵣₜ. The expansion device may comprise two or more distinct heating zones along the length of the expansion device, wherein each zone has at least one heater (e.g., one or more jacket heaters), and wherein the temperature of each zone can be set independently of the temperature of each of the other zones. Each zone may be set at the same temperature, or each zone may be set at a temperature different to the temperature of one or more of the other zones. The average residence time of the microspheres in the expansion device is from about 5 to about 200 s, preferably from about 10 to about 100 s, most preferably from about 20 to about 80 s.

Both wet and dry thermally expandable microspheres can be used in the method according to the disclosure. However, the method according to the disclosure is especially suitable for thermally expandable microspheres having a low wet content. Suitably, the thermally expandable microspheres have a dry solids content of more than about 50 weight %, preferably more than about 80 weight %, most preferably more than about 97 weight %.

The tip speed (i.e., the linear velocity at the outermost radial edge) of the feeding means is suitably from about 0.01 to about 1 ms⁻¹. For higher product throughput (≥25 kg/h), the tip speed is set to at least 0.8 ms⁻¹, preferably to at least 0.9 ms⁻¹, most preferably to from 0.9 to 0.99 ms⁻¹. A person skilled in the art would know how to set the tip speed of the feeding means within these ranges.

The one or more scrapers 9 are suitably mounted on the feeding means and suitably extend radially beyond the outer radius of the feeding means towards the inner surface of the hollow body. Furthermore, the one or more scrapers suitably extend longitudinally in the feeding direction. The one or more scrapers are suitably mounted so that the scrapers, alone, or in combination, effect a scraping of from about 1 to about 100 % of the longitudinal length of the inner surface of the hollow body, preferably from about 10 to about 100 %, most preferably from about 20 to about 95 %. The scrapers can be of different individual length. For example, there may be a combination of one or more long scrapers and one or more short scrapers. Preferably, one or two scrapers effecting a scraping of from about 70 to about 100 % of the longitudinal length of the inner surface of the hollow body is used together with 1 to 5, preferably 2 to 4, scrapers effecting a scraping of from about 10 to about 40 % of the longitudinal length of the inner surface of the hollow body. If too many long scrapers are used, there is a risk of clogging of microspheres within the screw, especially if the screw pitch is low. Suitably, the length of the scrapers are adjusted to be the most suitable depending on other process parameters such as dimension of the expansion device, rate of rotation, microsphere type, filler content etc.

In some cases, for example at weight ratios of added filler to microspheres of from about 1:100 to about 1:10, the scrapers effect a scraping of from about 20 to about 60 % of the longitudinal length of the inner surface of the hollow body. In other cases, for example at weight ratios of added filler to microspheres of from about 1:10 to about 1:3, the scrapers effect a scraping of from about 50 to about 100 % of the longitudinal length of the inner surface of the hollow body.

The number of scrapers mounted on the feeding means is suitably from 1 to 6, preferably from 2 to 4.

The scraping movement can be made at any part of the inner surface of the hollow body. Suitably, the one or more scrapers are mounted on the feeding means starting at the inlet side of the expansion device, i.e. where the unexpanded microspheres are added, and extending therefrom.

The expansion device and methods according to the present disclosure substantially reduce the "black-spot formation" issue and avoid clogging in the rotatable feeding means.

### Examples

The disclosure will be elucidated by the following worked examples without being limited thereto or thereby.

### Example 1 - Polished Microsphere Contact Surface

An expansion device comprising a cylindrical housing enveloping a conveyor screw as feeding means is used for expanding thermoplastic expandable microspheres. The screw is 2200 mm long and its diameter 205 mm. The screw is divided into three sections of equal length each having a different screw pitch which is 40, 50 and 60 mm, starting at the inlet. The screw has 4 scrapers mounted of which one has a length corresponding to 90% of the length of the inner surface of the cylindrical housing, and the three other scrapers each have a length corresponding to 25% of the same. The rotational speed of the screw is 90 r.p.m (tip speed 0.97 ms⁻¹). Microspheres of the type Expancel^{®} 920DU20 having Tₛₜₐᵣₜ = 118°C is pre-mixed with hydrophobic silicon dioxide in a relation 85 parts by weight microspheres and 15 parts by weight silicon dioxide. Then the microsphere-mixture is charged into the expansion device set at 168 °C (all zones). The residence time of the microspheres in the expansion device is 30 s. 20 kg/h of expanded microspheres of even density can be discharged. The visual observations of the inspected products that were discharged from the expansion device after 3 hours of continuous operation of the device (unpolished screw vs polished screw) are set out in the table below.

| **Screw type** | **Ra (µm)⁺** | **Average Ra (µm)** | **Product Quality*** |
|---|---|---|---|
| Unpolished | - 0.868 | 0.897 | - Off-white |
| | - 0.843 | | - Slight yellowing |
| | - 0.980 | | - "Black-spots" noticeable |
| Polished^{§} (electropolished) | - 0.312 | 0.353 | - Substantially white |
| | - 0.445 | | |
| | - 0.303 | | - No obvious yellowing |
| | | | - Negligible "black-spot" formation |

| | | | |
|---|---|---|---|
| ⁺Ra measured using a Mahr Perthometer M2 at three different positions along the length of the screw. *Expanded microspheres discharged from the expansion device were visually inspected. The inspected products were obtained from the expansion device 3 hours after continuous operation of the device to avoid any potential random fluctuation associated with initial startup and stabilization of the device (i.e., the inspected products are a true reflection of the products obtained during continuous operation of the respective devices). ^{§}Entire microsphere contact surface of the screw electropolished in accordance with EN ISO 15730:2016. | | | |

Polishing the conveyor screw resulted in a marked improvement the visual quality of the end-product obtained from the expansion device. This is important for end-use applications of the expanded microspheres wherein visual aesthetics are a high priority (and imperfections are to be avoided where possible), such as in (but not limited to) synthetic marble, light-coloured (e.g., white) coatings and paints, and polyurethane blocks for model making.

### Example 2 - High Throughput

Using the same apparatus setup as Example 1 (with electropolished screw), microspheres of the type Expancel^{®} 044DUT40 having Tₛₜₐᵣₜ = 100 °C were charged into the expansion device set at 160 °C (all zones). The conditions and results are set out in the below table.

| **Feed Rate of Microspheres** | **Screw speed (rpm)** | **Tip speed (ms⁻¹)** | **Observations** |
|---|---|---|---|
| 30 kg/h | 90 | 0.97 | White microspheres obtained with even density (26.5 kg/m³) |
| 30 kg/h | 54* | 0.58 | Screw clogged; safety shutdown alarm triggered |

| | | | |
|---|---|---|---|
| *Screw speed as used in Example 1 of EP1572432 | | | |

Maintaining a high tip speed is thus key to ensuring that the screw does not block (and trigger shutdown) at higher feed rates (i.e., 25 kg/h or higher). It was also found that the expansion device had to be maintained at a higher temperature (at least 40 °C above Tₛₜₐᵣₜ) to ensure controlled and even density distribution within the microspheres at a higher feed rate.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. A method of preparing expanded thermoplastic microspheres at a throughput rate of at least 25 kg/h, the method comprising charging thermally expandable microspheres into an expansion device comprising rotating feeding means disposed within a housing having a first end and a second end longitudinally opposite the first end, transporting the microspheres from the first end of the housing to the second end of the housing while increasing the temperature of the microspheres to achieve expansion thereof, and discharging the microspheres from the expansion device, wherein the linear velocity at the outermost radial edge of the rotating feeding means is set to at least 0.8 ms⁻¹, and wherein the temperature in the expansion device is set to at least 40 °C above Tₛₜₐᵣₜ, wherein "Tₛₜₐᵣₜ" is the temperature at which expansion of the thermally expandable microspheres starts.

2. The method of claim 1, wherein, before entering the expansion device, the thermally expandable microspheres are pre-mixed with a filler to prevent agglomeration of the microspheres.

3. The method of claim 2, wherein the filler is a silica.

4. The method of claims 2 or 3, wherein the weight ratio of filler to microspheres is from about 1:100 to about 1:3.

5. The method of any one of claims 1 to 4, wherein the thermally expandable microspheres have a dry solids content of more than about 97 weight %.

6. The method of any one of claims 1 to 5, wherein the rotating feeding means of the expansion device comprises a microsphere contact surface, wherein at least 80% of the microsphere contact surface has been polished, and wherein the rotating feeding means is configured to convey microspheres from the first end of the housing to the second end of the housing.

7. The method of claim 6, wherein at least 90% of the microsphere contact surface has been polished, more preferably at least 95% of the microsphere contact surface has been polished, more preferably at least 99% of the microsphere contact surface has been polished, and most preferably the entire microsphere contact surface has been polished.

8. The method of claims 6 or 7, wherein the microsphere contact surface has been polished by a mechanical polishing process, a chemical polishing process, an electropolishing process, or combinations thereof.

9. The method of claim 8, wherein the microsphere contact surface has been polished by an electropolishing process, preferably an electropolishing process in accordance with EN ISO 15730:2016 or ASTM B912.

10. The method of any one of claims 6 to 9, wherein the polished microsphere contact surface has an average Ra value of less than 0.6 µm, preferably less than 0.5 µm, wherein the average Ra value is determined as the average of three Ra values measured at three separate locations along the length of the microsphere contact surface, each Ra value measured using a Mahr Perthometer M2.

11. The method of any one of claims 1 to 10, wherein the rotating feeding means is a conveyor screw.

12. The method of any one of claims 1 to 11, further comprising one or more scrapers positioned between an outer radius of the feeding means and an inner surface of the housing.

13. The method of any one of claims 1 to 12, wherein the housing is provided with one or more heaters.

14. The method of any one of claims 1 to 13, wherein the feeding means is provided with one or more heaters.

## Patentansprüche

1. Verfahren für die Herstellung von expandierten thermoplastische Mikrokugeln mit einer Durchsatzrate von mindestens 25 kg/h, wobei das Verfahren Einfüllen thermisch expandierbarer Mikrokugeln in eine Expansionsvorrichtung, die rotierende Einspeisungsmittel umfasst, die innerhalb eines Gehäuses angeordnet sind, das ein erstes Ende und ein zweites Ende längenmäßig dem ersten Ende entgegengesetzt aufweist, Transportieren die Mikrokugeln von dem ersten Ende des Gehäuses zu dem zweiten Ende des Gehäuses, während die Temperatur der Mikrokugeln erhöht wird, um die Expansion davon zu erreichen, und Entladen der Mikrokugeln aus der Expansionsvorrichtung umfasst, wobei die Lineargeschwindigkeit der äußersten radialen Kante des rotierenden Einspeisungsmittels auf mindestens 0,8 ms⁻¹ eingestellt ist und wobei die Temperatur der Expansionsvorrichtung auf mindestens 40 °C über Tₛₜₐᵣₜ eingestellt ist, wobei "Tₛₜₐᵣₜ" die Temperatur ist, bei der die Expansion der thermisch expandierbaren Mikrokugeln beginnt.

2. Verfahren nach Anspruch 1, wobei, vor Eingehen in die Expansionsvorrichtung, die thermisch expandierbaren Mikrokugeln mit einem Füllstoff vorgemischt werden, um das Agglomerieren der Mikrokugeln zu verhindern.

3. Verfahren nach Anspruch 2, wobei der Füllstoff ein Siliciumdioxid ist.

4. Verfahren nach den Ansprüchen 2 oder 3, wobei das Gewichtsverhältnis von Füllstoff zu Mikrokugeln etwa 1:100 bis etwa 1:3 beträgt.

5. Verfahren nach einem der Ansprüche 1 bis 4, wobei die thermisch expandierbaren Mikrokugeln einen Trockenfeststoffgehalt von mehr als etwa 97 Gewichts-% aufweisen.

6. Verfahren nach einem der Ansprüche 1 bis 5, wobei das rotierende Einspeisungsmittel der Expansionsvorrichtung eine Mikrokugelkontaktfläche umfasst, wobei mindestens 80% der Mikrokugelkontaktfläche poliert worden sind und wobei das rotierende Einspeisungsmittel konfiguriert ist, Mikrokugeln von dem ersten Ende des Gehäuses zu dem zweiten Ende des Gehäuses zu befördern.

7. Verfahren nach Anspruch 6, wobei mindestens 90 % der Mikrokugelkontaktfläche poliert worden sind, noch bevorzugter mindestens 95 % der Mikrokugelkontaktfläche poliert worden sind, noch bevorzugter mindestens 99 % der Mikrokugelkontaktfläche poliert worden sind und am bevorzugtesten die gesamte Mikrokugelkontaktfläche poliert worden ist.

8. Verfahren nach den Ansprüchen 6 oder 7, wobei die Mikrokugelkontaktfläche durch ein mechanisches Polierverfahren, ein chemisches Polierverfahren, ein Elektropolierverfahren oder eine Kombination davon poliert worden ist.

9. Verfahren nach Anspruch 8, wobei die Mikrokugelkontaktfläche durch ein Elektropolierverfahren, bevorzugt ein Elektropolierverfahren EN ISO 15730:2016 oder ASTM B912 entsprechend poliert worden ist.

10. Verfahren nach einem der Ansprüche 6 bis 9, wobei die polierte Mikrokugelkontaktfläche einen durchschnittlichen Ra-Wert von weniger als 0,6 µm, bevorzugt weniger als 0,5 µm aufweist, wobei der durchschnittliche Ra-Wert als Durchschnitt von drei Ra-Werten bestimmt wird, die an drei einzelnen Stellen der Länge der Mikrokugelkontaktfläche entlang gemessen werden, wobei jeder Ra-Wert unter Anwendung eines Mahr-Perthometers M2 gemessen wird.

11. Verfahren nach einem der Ansprüche 1 bis 10, wobei das rotierende Einspeisungsmittel ein Schneckenförderer ist.

12. Verfahren nach einem der Ansprüche 1 bis 11, ferner einen oder mehrere Schaber umfassend, der/die zwischen einem Außenradius des Einspeisungsmittels und einer Innenfläche des Gehäuses positioniert sind.

13. Verfahren nach einem der Ansprüche 1 bis 12, wobei das Gehäuse mit einer oder mehreren Heizvorrichtungen versehen ist.

14. Verfahren nach einem der Ansprüche 1 bis 13, wobei das Einspeisungsmittel mit einer oder mehreren Heizvorrichtungen versehen ist.

## Revendications

1. Procédé de préparation de microsphères thermoplastiques expansées à un débit d'au moins 25 kg/h, le procédé comprenant l'introduction de microsphères thermiquement expansibles dans un dispositif d'expansion comprenant un moyen d'alimentation rotatif disposé à l'intérieur d'un logement ayant une première extrémité et une seconde extrémité opposée longitudinalement à la première extrémité, le transport des microsphères de la première extrémité du logement vers la seconde extrémité du logement tout en augmentant la température des microsphères afin de provoquer leur expansion, et l'évacuation des microsphères hors du dispositif d'expansion, dans lequel la vitesse linéaire au niveau du bord radial le plus externe du moyen d'alimentation rotatif est réglée à au moins 0,8 ms⁻¹, et dans lequel la température à l'intérieur du dispositif d'expansion est réglée à au moins 40 °C au-dessus de T_{début}, dans lequel « T_{début} » est la température à laquelle commence l'expansion des microsphères thermiquement expansibles.

2. Procédé selon la revendication 1, dans lequel, avant d'entrer dans le dispositif d'expansion, les microsphères thermiquement expansibles sont pré-mélangées avec une charge pour empêcher l'agglomération des microsphères.

3. Procédé selon la revendication 2, dans lequel la charge est une silice.

4. Procédé selon la revendication 2 ou 3, dans lequel le rapport pondéral de la charge aux microsphères est d'environ 1:100 à environ 1:3.

5. Procédé selon l'une quelconque des revendications 1 à 4, dans lequel les microsphères thermiquement expansibles ont une teneur en matières sèches supérieure à environ 97 % en poids.

6. Procédé selon l'une quelconque des revendications 1 à 5, dans lequel le moyen d'alimentation rotatif du dispositif d'expansion comprend une surface de contact avec les microsphères, dans lequel au moins 80 % de la surface de contact avec les microsphères ont été polis, et dans lequel le moyen d'alimentation rotatif est configuré pour transporter les microsphères de la première extrémité du logement vers la seconde extrémité du logement.

7. Procédé selon la revendication 6, dans lequel au moins 90 % de la surface de contact avec les microsphères ont été polis, plus préférablement au moins 95 % de la surface de contact avec les microsphères ont été polis, plus préférablement au moins 99 % de la surface de contact avec les microsphères ont été polis, et de manière préférée entre toutes la totalité de la surface de contact avec les microsphères a été polie.

8. Procédé selon les revendications 6 ou 7, dans lequel la surface de contact avec les microsphères a été polie par un procédé de polissage mécanique, un procédé de polissage chimique, un procédé d'électropolissage ou une combinaison de ceux-ci.

9. Procédé selon la revendication 8, dans lequel la surface de contact avec les microsphères a été polie par un procédé d'électropolissage, de préférence un procédé d'électropolissage selon la norme EN ISO 15730:2016 ou ASTM B912.

10. Procédé selon l'une quelconque des revendications 6 à 9, dans lequel la surface de contact avec les microsphères polie a une rugosité moyenne Ra inférieure à 0,6 µm, de préférence inférieure à 0,5 µm, dans lequel la rugosité moyenne Ra est déterminée comme la moyenne de trois valeurs Ra mesurées en trois points distincts le long de la surface de contact avec les microsphères, chaque valeur Ra étant mesurée à l'aide d'un perthomètre Mahr M2.

11. Procédé selon l'une quelconque des revendications 1 à 10, dans lequel le moyen d'alimentation rotatif est une vis sans fin.

12. Procédé selon l'une quelconque des revendications 1 à 11, comprenant en outre un ou plusieurs racleurs positionnés entre un rayon extérieur du moyen d'alimentation et une surface intérieure du boîtier.

13. Procédé selon l'une quelconque des revendications 1 à 12, dans lequel le logement est doté d'un ou de plusieurs éléments chauffants.

14. Procédé selon l'une quelconque des revendications 1 à 13, dans lequel le moyen d'alimentation est dotés d'un ou de plusieurs éléments chauffants.
